Europäisches Patentamt

(19) European Patent Office

Office européen des brevets

(11) Publication number: **0 217 620 B1**

## (12) EUROPEAN PATENT SPECIFICATION

(45) Date of publication of patent specification:
13.03.91 Bulletin 91/11

(51) Int. Cl.$^5$: **G01K 7/00, G01K 1/16**

(21) Application number: 86307301.1

(22) Date of filing: 23.09.86

(54) Temperature sensor.

(30) Priority: 25.09.85 GB 8523683

(43) Date of publication of application:
08.04.87 Bulletin 87/15

(45) Publication of the grant of the patent:
13.03.91 Bulletin 91/11

(84) Designated Contracting States:
AT BE CH DE FR GB IT LI LU NL SE

(56) References cited:
DE-A- 2 852 584
GB-A- 2 034 111
GB-A- 2 049 277
PATENT ABSTRACTS OF JAPAN, vol. 6, no.
203 (P-148)[1081], 14th October 1982; & JP-
A-57 111 425 (FUJITSU K.K.) 10-07-1982
ELEKTOR, vol. 2, no. 12, December 1976,
pages 1212-1218, Elektor Publishers Ltd, Can-
terbury, GB; "Thermometer"

(73) Proprietor: IMI PACTROL LIMITED
10 Pithey Place
Skelmersdale Lancashire, WN8 9PS (GB)

(72) Inventor: Bode, Peter Abiodun Ayotunde
c/o Mr. S. Tayo 181 Grange Avenue
Oldham Lancashire (GB)
Inventor: Collins, Roderick John
Little Blue Stone Cottage Blue Stone Lane
Mawdsley§Nr Ormskirk§Lancashire, L40 2RH
(GB)

(74) Representative: Lane, Michael John et al
IMI Plc Patents and Licensing Department
P.O. Box 216
Birmingham B6 7BA (GB)

## Description

The present invention relates to a temperature sensor, and in particular, but not exclusively, to a temperature sensor for use with a domestic water heater.

In domestic water heaters, it is necessary to monitor the temperature of the water in the heater so that the water will be of the desired temperature. Conventionally, this is done by using a thermostat which is arranged to regulate the flow of fuel, eg. gas, to the heater, and so control the temperature of the water. The simplest thermostat is a bi-metallic strip which bends when heated to open an electrical switch which controls the flow of fuel. Another thermostat takes the form of a contained liquid which vapourises at a desired temperature and which vapour operates bellows which in turn open and close an electrical switch. Yet another form of thermostat comprises a thermistor, which is an electronic device whose resistance decreases with increasing temperature. The thermistor is normally in one arm of a bridge circuit, the output of the bridge circuit being used to trigger a relay which can be used to control the supply of fuel.

However, the above devices suffer from the disadvantages that they are not particularly accurate, and they are relatively slow at responding to changes in temperature. These are particular disadvantages with modern water heaters which heat a smaller amount of water in a relatively short period of time, producing a rapid change in temperature of the water. The thermistor device also suffers from the disadvantage that it is relatively expensive, non linear, exhibits low sensitivity at high temperatures, and in particular requires a mains transformer when powered by a mains primary power source.

GB Patent Specification No 2034111A discloses a purpose-designed temperature sensing device utilising, eg a silicon diode in thermal contact with a heat conductive member adapted to be clamped to a heated pipe, the silicon diode being incorporated, in use, into suitable circuitry whereby the temperature of the heated pipe may be monitored. The circuitry necessarily operates at low voltages and, even if it were adapted continually to monitor the temperature of water contained in a water heater, it would, for safety reasons, be necessary to power the circuitry via a relatively bulky and expensive mains isolating transformer if mains power source were to be used.

GB Patent Specification No 2049277A discloses another purpose-designed temperature sensing device utilising, eg. a transistor. Again, the associated circuitry necessarily operates at low voltages and likewise for safety reasons would have to include a mains isolating transformer if a mains power source were to be used.

The temperature sensing portions of both devices described, respectively, in the above GB specifications require the use of specially made, relatively complex heat-conductive supports for the heat-sensitive semi-conductors specifically mentioned therein.

It is an object of the present invention to provide a temperature sensor which responds quickly to changes in temperature, is linear, has uniform sensitivity over its operating range and can be simply produced solely from readily available electronic components.

In accordance with the present invention there is provided a device for monitoring the temperature of a body, said device comprising a p-n junction which is mounted on a metal carrier so as to be in good thermal contact therewith, the metal carrier being adapted to be fitted in heat conductive engagement with said body so that the p-n junction adopts rapidly the prevailing temperature of that body, a constant current supply connected to the p-n junction so as to pass a constant current therethrough, and a means for monitoring the voltage drop across the p-n junction as the temperature of the p-n junction varies in accordance with the temperature of the body, the voltage drop providing a measure of said temperature, characterised in that said p-n junction and said carrier are constituted respectively by a, or the, p-n junction and the integral, electrically insulated metallic mount of a power semi-conductor device known per se.

The invention is described further hereinafter, by way of example only, with reference to the accompanying drawings, in which :

Fig. 1 is a circuit diagram of one embodiment of a temperature sensor in accordance with the present invention ;

Fig. 2 is an enlarged diagrammatic view of a typical triac ;

Fig. 3 is a graph of voltage against temperature for a typical triac ; and

Fig. 4 is a circuit diagram of one simple example of a constant current circuit for use in the sensor of Fig. 1.

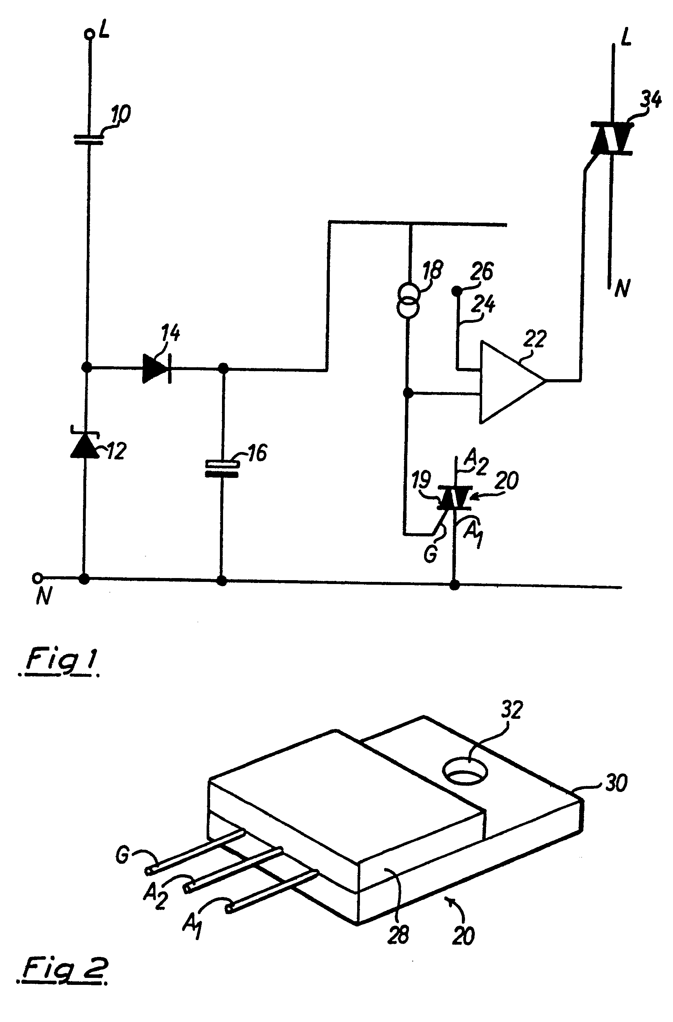

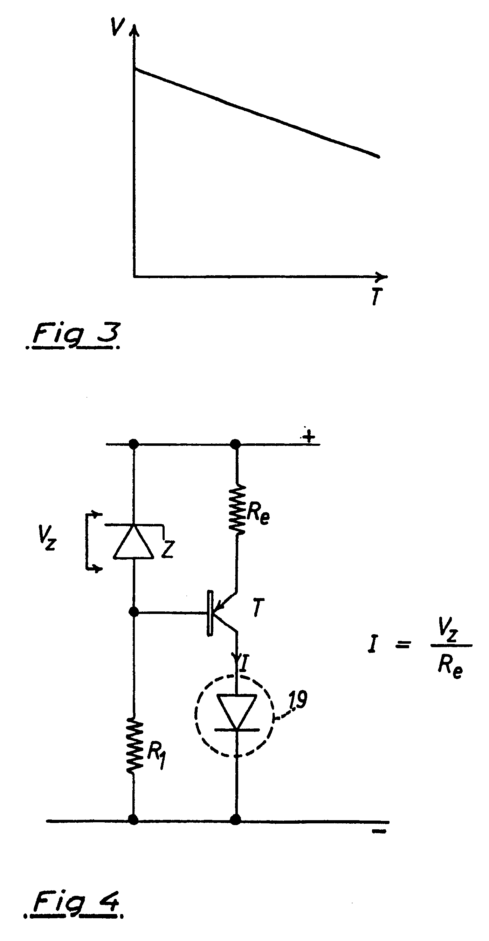

The circuit of Fig. 1 comprises a live mains connection L and a neutral mains connection N. The mains is converted to a stable low-voltage d.c. by means of a capacitor 10, a Zener diode 12, a diode 14 and an electrolytic capacitor 16. The low-voltage d.c. provided by the latter components is fed to a constant-current device 18, which provides a constant current irrespective of the impedance of a load to which it is connected. A large number of such constant current devices are known, one typical example being that shown in fig. 4 and described further hereinafter.

The constant current device 18 is connected to the neutral line N by way of a p-n junction 19 of a type which is integrally mounted on a metal carrier so as to be in good thermal contact therewith but electrically insulated therefrom, ie. the, or a, p-n junction of a conventional, readily available "power" (ie. high voltage) semi-conductor device.

In the illustrated embodiment, the p-n junction is obtained using a triac 20. Triacs have three terminations, which are identified conventionally as the $A_1$, $A_2$ and gate G terminations. In this embodiment, the $A_1$ terminal of the triac 20 is connected to the neutral connection N of the mains and the gate G of the triac is connected to the constant current source 18. The junction between the gate C and the constant current source 18 is connected to one input of an operational amplifier 22. The other input 24 of the amplifier 22 is connected to a reference voltage source 26 which may be varied, depending on the temperature to be maintained. The $A_2$ terminal of the triac is not used.

In use, the triac 20 is mounted onto a device or object whose temperature is to be monitored. For example, the triac may be mounted onto one of the pipes in a domestic water heater, in order to monitor the temperature of the water. Referring to fig. 2, a typical triac 20 comprises an electronic component portion 28, containing the complex P and N layers of the triac, which is formed into an integral package with a metal flange 30 which is provided with a hole 32. The hole 32 is used conventionally for connecting the triac to a circuit board but in this case the triac is secured to, for example, a pipe by means of a bolt (not shown) which passes through the hole 32 and engages with a threaded hole in the pipe.

The metal flange provides excellent thermal contact between the pipe and the electronic component portion 28, to the extent that the difference between the flange 30 and the portion 28 amounts typically to only about 0.5°C per watt. At the same time, it will be appreciated that there are no electrical connections which are, or which could be, in contact with the water in the pipe. In regard to the insulation capabilities of a typical triac between its terminations and the metal flange 30, it has been found that the device is able to withstand a voltage of at least 2.5 kV without breakdown.

Thus, the triac is a device which will respond quickly to the temperature of the water, due to its excellent thermal conduction properties, yet it is a very safe device because of its excellent electrical insulation properties

In use, only the $A_1$ and the gate G terminals are used, the $A_2$ terminal being unconnected. Thus, the triac in this configuration is effectively a forward-biased p-n junction, whose typical variation of voltage with temperature, for constant current, is shown in Fig. 3. As can be seen, the voltage V falls linearly with increasing temperature T, and thus the voltage across the triac in this configuration gives a measure of the temperature of the p-n junction 19 and hence of the temperature of the body to which it is attached by way of the flange 30.

By comparing the voltage drop across the triac with the reference voltage using the operational amplifier 22, an output signal from the operational amplifier 22 may be used to alter the state of a second triac 34 which is used in its normal mode as a switching device to control the mains connections to regulate a variable such as the supply of fuel, ie. when the voltage drop across the triac 20 is greater than the reference voltage, the triac 34 is switched ON to allow mains current to flow and vice-versa.

As will be appreciated, the linear nature of the curve of V against T for the triac makes it ideal for use as a temperature sensor. By appropriate switching and calibration, it will be appreciated that the output may be fed into, say, a digital voltmeter to give a direct reading of temperature.

The invention is not restricted to the details of the foregoing embodiment. For example, it is not essential for the p-n junction to be formed by a triac and the triac 20 may therefore be replaced by a thyristor, a power transistor or a power diode, or any conventional power semi-conductor device comprising a p-n junction integrally mounted on a metal carrier whereby there will be good thermal conduction via said metal carrier between the p-n junction and the device or object whose temperature is to be measured.

Moreover, the device need not produce an "on" or "off" signal to a switching device. The output of the device may be used to vary continuously the flow of fuel to the heating device.

Any suitable constant current device can be used for the source 18. One example of such a device is shown in Fig. 4 and comprises a Zener diode Z connected in series with a resistor $R_1$ across a stabilized d.c. supply. The junction of the Zener diode Z and resistor $R_1$ is connected to the base of a PNP transistor T whose emitter is connected to the positive supply rail by way of a resistor $R_e$ and whose collector is connected to the negative rail by way of a load, which in this case comprises the p-n junction 19 of the triac 20. As is well known, the current I in the load 19 is given by $V_z/R_e$ and is therefore independent of the resistance of the load 19.

Naturally, the current passed through the p-n junction by the constant current source 18 must be sufficiently low that it does not itself cause any appreciable temperature rise in the p-n junction. For this purpose, the current passed through the junction would typically be of the order of tens of microamps, the order of voltage change detected at the amplifier 22 being typically of the order of 10mV. For a given p-n junction, the change of voltage drop thereacross with temperature for a predetermined current can be calibrated.

## Claims

1. A device for monitoring the temperature of a body, said device comprising a p-n junction (19) which is mounted on a metal carrier so as to be in good thermal contact therewith, the metal carrier being adapted to be fitted in heat conductive engagement with said body, a constant current supply (18) connected to the p-n junction (19) so as to pass a constant current therethrough, and means (22) for monitoring the voltage drop across the p-n junction (19) as the temperature of the p-n junction (19) varies in accordance with temperature of said body, said voltage drop providing a measure of said temperature, characterised in that said p-n junction (19) and said carrier are constituted respectively by a, or the, p-n junction and the integral, electrically insulated metallic mount (30) of a power semi-conductor device (20) known per se.

2. A device according to claim 1 characterised in that said power semi-conductor device is a triac (20), a thyristor, a power transistor or a power diode.

3. A method of measuring the temperature of a body wherein a p-n junction (19) mounted on a metal carrier in good thermal contact therewith is located in heat conductive engagement with the body, a constant current is passed through the p-n junction from a constant current supply (18), and the voltage drop across the p-n junction (19) is monitored as the temperature of the p-n junction (19) varies in accordance with the temperature of said body, said voltage drop providing a measure of said temperature, characterised in that the p-n junction (19) mounted on a metal carrier is constituted by a, or the, p-n junction and the integral, electrically insulated metallic mount (30) of a power semi-conductor device (20) known per se.

**Ansprüche**

1. Vorrichtung zum Überwachen der Temperatur eines Körpers, mit einem p-n-Übergang (19), der auf einem Metallträger angebracht ist, so daß er in gutem Wärmekontakt mit ihm ist, wobei der Metallträger in wärmeleitende Anlage mit dem Körper bringbar ist, einer Konstantstromzuführung (18), die mit dem p-n-Übergang (19) verbunden ist, um einen konstanten Strom durch ihn hindurchzuleiten, und einer Einrichtung (22) zum Überwachen des Spannungsabfalles an dem p-n-Übergang (19), wenn sich die Temperatur des p-n-Übergangs (19) im Einklang mit der Temperatur des Körpers ändert, wobei der Spannungsabfall ein Maß für diese Temperatur liefert, dadurch gekennzeichnet, daß der p-n-Übergang (19) und der Träger jeweils durch einen oder den p-n-Übergang und die integrierte, elektrisch isolierte metallische Halterung (30) eines an sich bekannten Halbleiterleistungsgliedes (20) gebildet werden.

2. Vorrichtung nach Anspruch 1, dadurch gekennzeichnet, daß das Halbleiterleistungsglied ein Triac (20), ein Thyristor, ein Leistungstransistor oder eine Leistungsdiode ist.

3. Verfahren zum Messen der Temperatur eines Körpers, bei welcher ein p-n-Übergang (19), der auf einem Metallträger in gutem Wärmekontakt mit ihm angebracht ist, in wärmeleitender Anlage mit dem Körper angeordnet ist, ein konstanter Strom durch den p-n-Übergang von einer Konstantstromzuführung (18) hindurchgeleitet wird und der Spannungsabfall an dem p-n-Übergang (19) überwacht wird, wenn sich die Temperatur des p-n-Übergangs (19) im Einklang mit der Temperatur des Körpers ändert, wobei der Spannungsabfall ein Maß für die Temperatur liefert, dadurch gekennzeichnet, daß der auf einem Metallträger angebrachte p-n-Übergang (19) durch einen oder den p-n-Übergang und die integrierte, elektrisch isolierte metallische Halterung (19) eines an sich bekannten Halbleiterleistungsgliedes (20) gebildet wird.

**Revendications**

1. Dispositif destiné à contrôler la température d'un corps, ledit dispositif comportant une jonction p-n (19) qui est montée sur un support métallique afin d'être en bon contact thermique avec lui, le support métallique étant conçu pour être monté en contact conducteur de la chaleur avec ledit corps, une alimentation (18) à courant constant connectée à la jonction p-n (19) afin de faire passer un courant constant à travers elle, et un moyen (22) destiné à contrôler la chute de tension à travers la jonction p-n (19) lorsque la température de la jonction p-n (19) varie conformément à la température dudit corps, ladite chute de tension donnant une mesure de ladite température, caractérisé en ce que ladite jonction p-n (19) et ledit support sont constitués respectivement par une, ou la, jonction p-n et la monture métallique électriquement isolée, intégrale (30) d'un dispositif semiconducteur de puissance (20) connu en soi.

2. Dispositif selon la revendication 1, caractérisé en ce que ledit dispositif semiconducteur de puissance est un triac (20), un thyristor, un transistor de puissance ou une diode de puissance.

3. Procédé de mesure de la température d'un corps dans lequel une jonction p-n (19) montée sur un support métallique en bon contact thermique avec lui est placée en contact conducteur de la chaleur avec le corps, une alimentation (18) en courant constant fait passer un courant constant à travers la jonction p-n, et la chute de tension à travers la jonction p-n (19) est contrôlée pendant que la température de la jonction p-n (19) varie conformément à la température dudit corps, ladite chute de tension donnant une mesure de ladite température, caractérisé en ce que la jonction p-n (19) montée sur un support métallique est constituée par une, ou la, jonction p-n et la monture métallique électriquement isolée, intégrale (30) d'un dispositif semiconducteur de puissance (20) connu en Soi.

_Fig 1_.

_Fig 2_.

_Fig 3_.

$$I = \frac{V_z}{R_e}$$

_Fig 4_.